# EUROPEAN PATENT SPECIFICATION

(11) **EP 0 500 164 B1**
(45) Date of publication and mention of the grant of the patent: **27.09.1995**
(21) Application number: 92200359.5
(22) Date of filing: 07.02.1992
(51) Int. Cl.: F16F 1/36, F16F 1/42

(54) **Vibration and shock absorber**
Stoss- und Schwingungsdämpfer
Amortisseur de chocs et de vibrations

(30) Priority: 22.02.1991 NL 9100317
(43) Date of publication of application: 26.08.1992
(73) Proprietor: LOGGERS RUBBERTECHNIEK B.V., NL-3316 BE Dordrecht (NL)
(72) Inventor: Wilmen, Marco, NL-3251 XP Stellendam (NL)
(74) Representative: de Bruijn, Leendert C.

(56) References cited:
- EP-A- 0 303 405
- EP-A- 0 403 363
- FR-A- 1 256 498
- FR-A- 2 122 018
- FR-A- 2 360 014
- US-A- 3 003 738
- US-A- 3 055 687

## Description

The invention relates to a vibration and shock absorber for three-dimensional working, comprising an element of a resilient material, in particular a polymer as according to the preamble of claim 1.

A shock absorber according to the preamble of claim 1 is known from FR-B-2122018. That document shows in figure 1 a shock absorber comprising between two parallel flange plates a hollow element which is symmetrical with respect to a plane of symmetry parallel to the flange plates and which is formed by two bowl-shaped parts of which the rims are facing each other.

From figures 9-10c of EP-A-0403363 a further shock absorber is known for use in a liquid pump in a vehicle. The corresponding description suggests that the shock absorber has an elastic central body which is provided by a tubular body with a horizontally extending central axis. The end faces of this known resilient element are open, and ribs, running in longitudinal direction of said known resilient element, project into the inner spacing.

The object of the invention is to provide a vibration and shock absorber in which the ratio between the vertical and horizontal spring characteristic is smaller than 1 : 1.1 and the deformation of the absorber during shock load in all directions can be at least 55% of the height of the absorber in the unloaded state, while the natural frequency of the absorber can be less than 6 Hz under a static load.

This object is achieved with the features according to the characterising part of claim 1.

In an absorber formed in this way the above-mentioned spring characteristic is obtained in three directions owing to the fact that, during displacements in the direction of the vertical axis of the element, said ribs are subjected to bending stress.

Reinforcement plates of a rigid material, in particular a metal, are preferably fitted inside the hollow element on said ribs, on either side of the above-mentioned plane of symmetry, while reinforcement plates of a rigid material lying in the above-mentioned plane of symmetry can be embedded in at least some of said ribs, in order to be able to influence the shape factors and the moduli of elasticity of the polymer used.

The abovementioned apertures are advantageously each bounded by six edges, three on each side of the plane of symmetry, these three edges essentially enclosing a truncated triangle whose imaginary base lies in the plane of symmetry.

The flange plates preferably each have a number of upright ribs running radially from the outside towards the centre, towards the vertical axis of the element, the height of which ribs increases from the inside to the outside, and which are embedded in the material of the element. The abovementioned shape factors and moduli of elasticity can consequently also be influenced, while in addition the flange plates are stretched.

The invention will be explained in greater detail with reference to the examplary embodiment shown in the drawing.

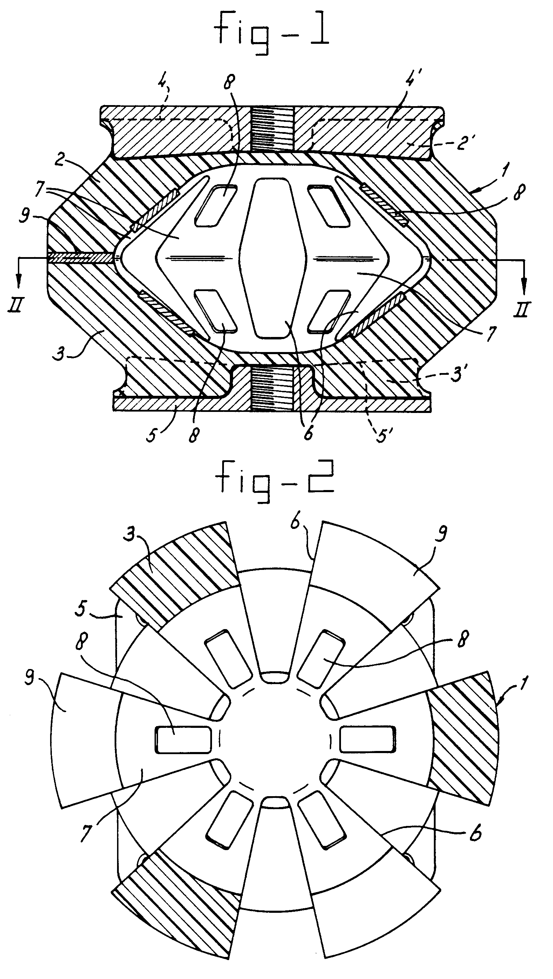

Figure 1 shows a vertical section through an absorber according to the invention.

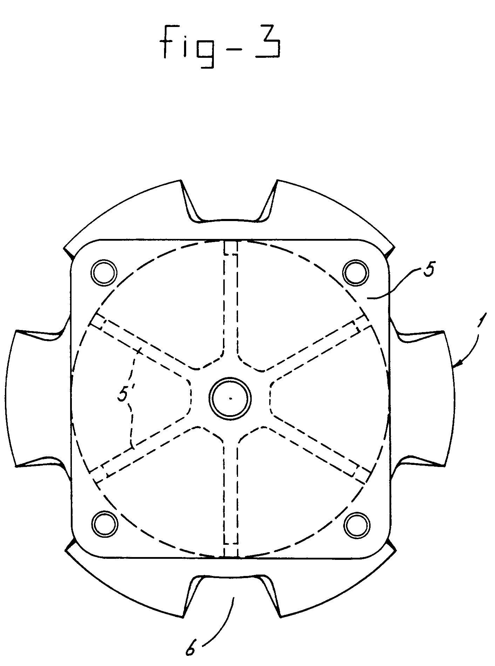

Figure 2 shows a section along the line II-II in Figure 1.

Figure 3 shows the vibration absorber according to Figure 1 in bottom view.

As shown in the figures, the vibration absorber comprises a hollow element 1 of a resilient material, for example a polymer. Said element is divided into two bowl-shaped parts 2 and 3 by the horizontal plane of symmetry running along the line II-II, the top bowl-shaped part 2 being turned upside down and connecting to the bottom bowl-shaped part 3. The base part 2' of the bowl-shaped part 2 is connected to a flange plate 4, while the base part 3' of the bowl-shaped part 3 is connected to a flange plate 5.

A number of apertures 6, lying at equal distances from each other and each bounded by six edges, three on each side of said horizontal plane of symmetry, are provided in the wall of the element 1, each aperture 6 being divided by said plane of symmetry into two equal parts, each the shape of a truncated triangle.

Ribs 7 are present between the apertures 6, against which ribs reinforcement plates 8 of a rigid material are fitted on either side of said horizontal plane of symmetry. Reinforcement plates 9 are also embedded in some of the ribs 7, said plates lying in said horizontal plane of symmetry.

The flange plates 4 and 5 are each provided with a number of upright ribs 4', 5' running radially towards the centre, the height of which increases from the centre outwards, and which are embedded in the material of the base part 2', 3'.

The absorber shown in the figures has, for example, a height of 115 mm, while the flange plates have a width of 120 mm.

## Claims

1. Vibration and shock absorber for three-dimensional action, comprising a hollow resilient element (1) which is mounted between two parallel flange plates (4, 5), which element (1) is formed by two interconnected bowl-shaped parts (2, 3) which are positioned according to a plane of symmetry which is parallel to the said flange plates (4, 5), with the rims of the said bowl-shaped parts (2, 3) facing each other, the flange plates (4, 5) being of rigid material, **characterized in that** a number of elongated apertures (6) are provided spaced apart in the side walls of the said hollow element (1) running between the flange plates (4, 5), each aperture extending from a position near the one flange plate (4) towards the other flange plate (5), such that a number of ribs (7) are formed spaced apart between said apertures (6), the apertures (6) widening out towards the said plane of symmetry.

2. Absorber according to claim 1, **characterized in that** reinforcement plates (8) of a rigid material are fitted inside the hollow element (1), on said ribs (7), on either side of the above-mentioned plane of symmetry.

3. Absorber according to claims 1 or 2, **characterized in that** reinforcement plates (9) of a rigid material, lying in the above-mentioned plane of symmetry, are embedded in at least some of said ribs.

4. Absorber according to claims 1-3, **characterized in that** the above-mentioned apertures (6) are each bounded by six edges, three on each side of the plane of symmetry, these three edges essentially enclosing a truncated triangle whose imaginary base lies in the plane of symmetry.

5. Absorber according to claims 1-4, **characterized in that** the flange plates (4, 5) each have a number of upright ribs (4', 5') running radially from the outside towards the centre, towards the vertical axis of the element, the height of which ribs increases from the inside to the outside, and which are embedded in the material of the element (1).

## Patentansprüche

1. Dreidimensional wirksamer Schwingungs- und Stoßdämpfer mit einem hohlen elastischen Bauteil (1), das zwischen zwei parallelen Flanschplatten (4, 5) befestigt ist und das von zwei miteinander verbundenen schalenförmigen Teilen (2, 3) gebildet wird, die bezogen auf eine Symmetrieebene, die parallel zu den genannten Flanschplatten (4, 5) liegt, mit ihren Rändern aneinanderliegen, wobei die Flanschplatten (4, 5) aus festem Material bestehen,
**dadurch gekennzeichnet**,
daß eine Anzahl von gestreckten beabstandeten einzelnen Aperturen (6) in den Seitenwänden des hohlen Bauteiles (1) vorgesehen ist, die zwischen den Flanschplatten (4, 5) verlaufen, wobei sich jede Apertur von einem Ort nahe der einen Flanschplatte (4) zu der anderen Flanschplatte (5) erstreckt, so daß eine Anzahl von einzelnen beabstandeten Rippen (7) zwischen den genannten Aperturen (6) gebildet wird, die sich zu der genannten Symmetrieebene hin erweitern.

2. Dämpfer nach Anspruch 1, dadurch gekennzeichnet, daß Verstärkungsplatten (8) aus festem Material innerhalb des Hohlelementes (1), auf genannten Rippen (7), auf jeder Seite der oben erwähnten Symmetrieebene angebracht sind.

3. Dämpfer nach Anspruch 1 oder 2, dadurch gekennzeichnet, daß Verstärkungsplatten (9) aus festem Material, die in der oben erwähnten Symmetrieebene liegen, in wenigstens eine der Rippen eingebettet sind.

4. Dämpfer nach Ansprüchen 1 bis 3, dadurch gekennzeichnet, daß die oben erwähnten Aperturen (6) jeweils durch sechs Kanten begrenzt sind, drei auf jeder Seite der Symmetrieebene, wobei diese drei Kanten im wesentlichen ein stumpfes Dreieck einschließen, dessen imaginäre Basis in der Symmetrieebene liegt.

5. Dämpfer nach Ansprüchen 1 bis 4, dadurch gekennzeichnet, daß die Flanschplatten (4, 5) jeweils eine Anzahl von aufrechten Rippen (4', 5') aufweisen, die radial von der Außenseite zum Zentrum laufen, wobei zu der Vertikalachse des Elementes die Höhe der Rippen von innen nach außen wächst, und die in das Material des Elementes (1) eingebettet sind.

## Revendications

1. Amortisseur de vibrations et de chocs prévu pour une action tridimensionnelle, comprenant un élément élastique creux (1) qui est monté entre deux semelles parallèles (4, 5), cet élément (1) étant constitué par deux parties en forme de cuvettes (2, 3) mutuellement accouplées, qui sont positionnées conformément à un plan de symétrie qui est parallèle aux semelles (4, 5), avec les bords des parties en forme de cuvettes (2, 3) disposés face à face, les semelles (4, 5) étant en matériau rigide, caractérisé en ce qu'un certain nombre d'ouvertures allongées (6) sont formées de manière mutuellement espacée dans les parois latérales de l'élément creux (1), en s'étendant entre les semelles (4, 5), chaque ouverture s'étendant depuis une position proche d'une semelle (4) vers l'autre semelle (5), de façon qu'un certain nombre de nervures (7) soient formées de manière espacée entre les ouvertures (6), les ouvertures (6) s'élargissant en direction du plan de symétrie.

2. Amortisseur selon la revendication 8, caractérisé en ce que des plaques de renfort (8) en un matériau rigide sont disposées à l'intérieur de l'élément creux (1), sur les nervures (7), de part et d'autre du plan de symétrie mentionné ci-dessus.

3. Amortisseur selon les revendications 1 ou 2, caractérisé en ce que des plaques de renfort (9) en un matériau rigide, s'étendant dans le plan de symétrie mentionné ci-dessus, sont noyées dans certaines au moins des nervures.

4. Amortisseur selon les revendications 1-3, caractérisé en ce que chacune des ouvertures (6) mentionnées ci-dessus est limitée par six bords, avec trois d'entre eux de chaque côté du plan de symétrie, ces trois bords entourant pratiquement un triangle tronqué dont la base imaginaire s'étend dans le plan de symétrie.

5. Amortisseur selon les revendications 1-4, caractérisé en ce que chacune des semelles (4, 5) comporte un certain nombre de nervures verticales (4', 5') s'étendant en direction radiale à partir de l'extérieur vers le centre, en direction de l'axe vertical de l'élément, la hauteur de ces nervures augmentant de l'intérieur vers l'extérieur, et ces nervures étant noyées dans le matériau de l'élément (1).
